# EUROPEAN PATENT APPLICATION

(11) **EP 4 386 706 A1**
(43) Date of publication of application: **19.06.2024**
(21) Application number: 23211839.8
(22) Date of filing: 23.11.2023
(51) Int. Cl.: G08B 29/14

(54) **SELF-TESTING HAZARD SENSING DEVICE DIAGNOSTICS**

(30) Priority: 16.12.2022 US 202218082640
(71) Applicant: Honeywell International Inc., Charlotte, NC 28202 (US)
(72) Inventor: MUTHUKRISHNAN, Karthikeyan, Charlotte, 28202 (US); E K Vipin, Das, Charlotte, 28202 (US)
(74) Representative: Haseltine Lake Kempner LLP

(57) **Abstract**

Devices, methods, and systems for self-testing hazard sensing device diagnostics are described herein. One device includes a user interface, a memory, and a processor configured to execute executable instructions stored in the memory to receive, via the user interface, a selection of a self-testing hazard sensing device, send identification information for the self-testing hazard sensing device to a gateway device responsive to receiving the selection, receive, from the gateway device, diagnostic data for the self-testing hazard sensing device, and display, on the user interface, the received diagnostic data for the self-testing hazard sensing device.

## Description

### Technical Field

The present disclosure relates generally to devices, methods, and systems for self-testing hazard sensing device diagnostics.

### Background

Large facilities (e.g., buildings), such as commercial facilities, office buildings, hospitals, and the like, may have a fire alarm system that can be triggered during an emergency situation (e.g., a fire) to warn occupants to evacuate. For example, a fire alarm system may include a fire control panel and a plurality of hazard (e.g., fire) sensing devices (e.g., smoke detectors), located throughout the facility (e.g., on different floors and/or in different rooms of the facility) that can sense a fire occurring in the facility and provide a notification of the fire to the occupants of the facility via alarms.

Maintaining the fire alarm system can include regular testing of the fire sensing devices to determine whether they are functioning properly or require maintenance. Failure to properly maintain the fire sensing devices can result in false alarms being raised by the devices, can result in the devices failing to sense a fire occurring in the facility, and/or can reduce the lifetime of the devices.

### Brief Description of the Drawings

Figure 1 illustrates a block diagram of a system for self-testing hazard sensing device diagnostics in accordance with an embodiment of the present disclosure.
Figures 2A and 2B illustrate an example of a schematic diagram of a facility having a plurality of self-testing hazard sensing devices in accordance with an embodiment of the present disclosure.
Figure 3 illustrates a block diagram of a self-test function of a self-testing hazard sensing device in accordance with an embodiment of the present disclosure.
Figure 4 illustrates an example of a self-testing hazard sensing device in accordance with an embodiment of the present disclosure.

### Detailed Description

Devices, methods, and systems for self-testing hazard sensing device diagnostics are described herein. One device includes a user interface, a memory, and a processor configured to execute executable instructions stored in the memory to receive, via the user interface, a selection of a self-testing hazard sensing device, send identification information for the self-testing hazard sensing device to a gateway device responsive to receiving the selection, receive, from the gateway device, diagnostic data for the self-testing hazard sensing device, and display, on the user interface, the received diagnostic data for the self-testing hazard sensing device.

Embodiments of the present disclosure can provide diagnostic (e.g. health) data for a self-testing hazard sensing device to a user (e.g., maintenance technician) such that the user can determine whether maintenance of the device is needed and/or perform the required maintenance on the device. Accordingly, embodiments of the present disclosure can reduce and/or prevent false alarms from being raised by the self-testing hazard sensing device, can ensure that fire events that are actually occurring will be sensed by the devices, and/or can increase the lifetime of the device.

Further, embodiments of the present disclosure can provide the diagnostic data for the self-testing hazard sensing device to the user in a manner that enables the user to determine whether maintenance of the device is needed and/or to perform the required maintenance in a quicker, easier, and/or more informed manner than previous approaches. For example, embodiments of the present disclosure can provide the diagnostic data for the device to the user during a visual inspection of the device, without the user having to physically access (e.g., touch) the device. Further, embodiments of the present disclosure can provide diagnostic data for the device to the user that may not be available to the user through physical access to the device.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that mechanical, electrical, and/or process changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

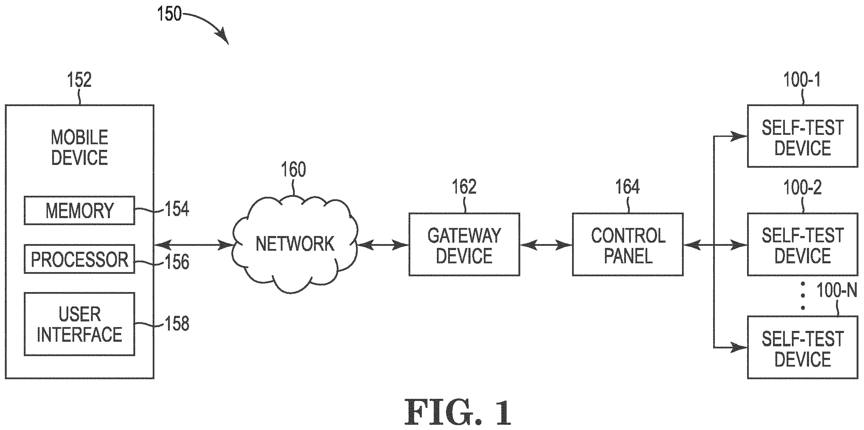

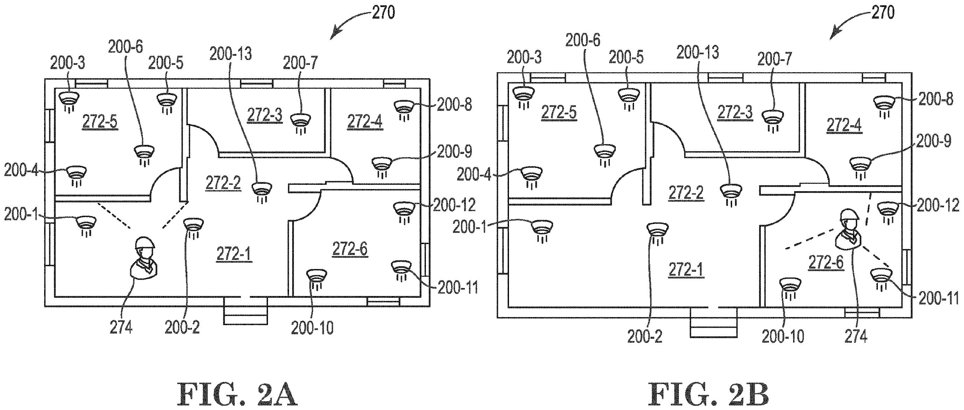

The figures herein follow a numbering convention in which the first digit or digits correspond to the drawing figure number and the remaining digits identify an element or component in the drawing. Similar elements or components between different figures may be identified by the use of similar digits. For example, 100 may reference element "00" in Figure 1, and a similar element may be referenced as 200 in Figure 2.

As used herein, "a", "an", or "a number of" something can refer to one or more such things, while "a plurality of' something can refer to more than one such things. For example, "a number of devices" can refer to one or more devices, while "a plurality of devices" can refer to more than one component.

Figure 1 illustrates a block diagram of a system 150 for self-testing hazard sensing device diagnostics in accordance with an embodiment of the present disclosure. As shown in Figure 1, system 150 can include a plurality of self-testing hazard sensing devices 100-1, 100-2, . .., 100-N (which may be collectively referred to herein as self-testing hazard sensing devices 100). Self-testing hazard sensing devices 100 can be located throughout a facility (e.g., in different rooms and/or on different floors of the facility), as will be further described herein (e.g., in connection with Figures 2A-2B).

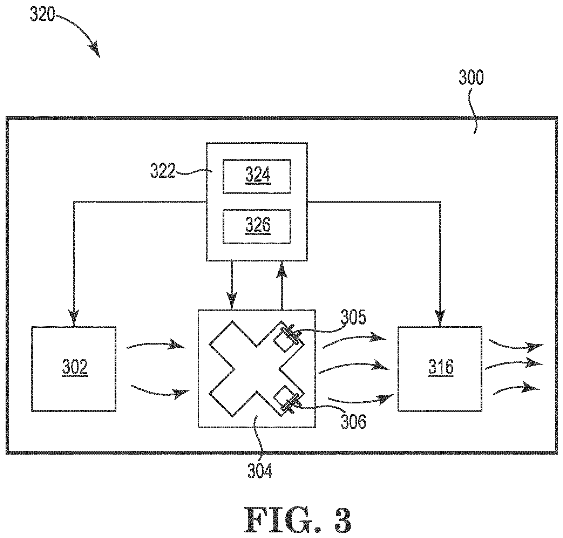

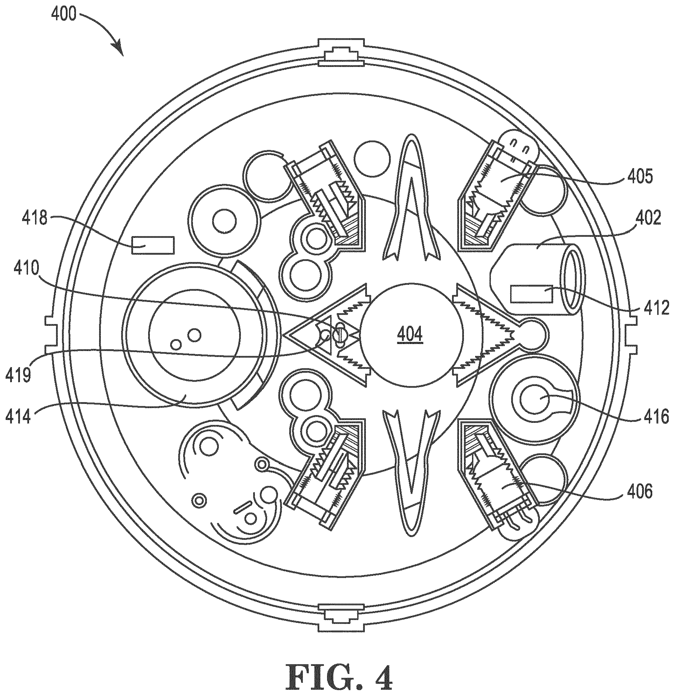

As used herein, the term "hazard sensing device" may include and/or refer to, for instance, a fire and/or carbon monoxide sensing device. For example, self-testing hazard sensing devices 100 can be part of a fire control system of the facility, and can be used to sense a fire occurring in the facility and/or sense carbon monoxide present in the facility. Examples of self-testing hazard sensing devices 100 will be further described herein (e.g., in connection with Figures 3 and 4).

As shown in Figure 1, system 150 can include a control panel (e.g. fire control panel) 164. Control panel 164 can be part of the fire control system of the facility. For instance, control panel 164 can be a physical control panel, such as a control box, installed in the facility.

Control panel 164 can be used by a user (e.g., maintenance technician) to monitor and/or control self-testing hazard sensing devices 100. For example, control panel 164 can receive (e.g., collect) data, such as, for instance, real-time operational data, associated with self-testing hazard sensing devices 100. For instance, control panel 164 can receive the data directly from self-testing hazard sensing devices 100. Such data can include, for instance, diagnostic data for self-testing hazard sensing devices 100, as will be further described herein.

As shown in Figure 1, system 150 can include a gateway device 162. Gateway device 162 can be used by a user (e.g., maintenance technician) to perform inspections, maintenance, and/or upgrades, among other operations, on components self-testing hazard sensing devices 100. For example, gateway device 162 can be connected to control panel 164, and can communicate with control panel 164 to receive the data (e.g., the diagnostic data) associated with self-testing hazard sensing devices 100 collected by control panel 164. As an additional example, gateway device 162 may be permanently installed and/or connected at the facility, such that it can continuously send (e.g., push) the data collected by control panel 164 to a centralized server (not shown in Figure 1) for detection of anomalies or other issues in the fire control system of the facility.

As shown in Figure 1, system 150 can include a mobile device 152. Mobile device 152 can be, for example, a device that is (or can be) carried and/or worn by a user, such as, for instance, a phone (e.g., smart phone), tablet, personal digital assistant (PDA), or wrist-worn device (e.g., smart watch), among other types of mobile devices. For instance, mobile device 152 can be the mobile device of a maintenance technician of the fire control system.

Mobile device 152 can communicate with gateway device 162 via network 160, as illustrated in Figure 2. Network 160 can be a network relationship through which gateway device 162 and mobile device 152 can communicate. Examples of such a network relationship can include a distributed computing environment (e.g., a cloud computing environment), a wide area network (WAN) such as the Internet, a local area network (LAN), a personal area network (PAN), a campus area network (CAN), or metropolitan area network (MAN), among other types of network relationships. For instance, network 160 can include a number of servers that receive information from, and transmit information to, gateway device 162 and mobile device 152 via a wired or wireless network.

As used herein, a "network" can provide a communication system that directly or indirectly links two or more computers and/or peripheral devices and allows users to access resources on other computing devices and exchange messages with other users. A network can allow users to share resources on their own systems with other network users and to access information on centrally located systems or on systems that are located at remote locations. For example, a network can tie a number of computing devices together to form a distributed control network (e.g., cloud).

A network may provide connections to the Internet and/or to the networks of other entities (e.g., organizations, institutions, etc.). Users may interact with network-enabled software applications to make a network request, such as to get a file or print on a network printer. Applications may also communicate with network management software, which can interact with network hardware to transmit information between devices on the network.

As shown in Figure 1, mobile device 152 can include a user interface 158. A user (e.g., operator) of the mobile device 152 can interact with the mobile device 152 via the user interface 158. For example, the user interface 158 can provide (e.g., display and/or present) information to the user of mobile device 152, and/or receive information from (e.g., input by) the user of mobile device 152. For instance, in some embodiments, user interface 158 can be a graphical user interface (GUI) that can provide and/or receive information to and/or from the user of the mobile device 152. The display can be, for instance, a touch-screen (e.g., the GUI can include touch-screen capabilities). Alternatively, a display can include a television, computer monitor, mobile device screen, other type of display device, or any combination thereof, connected to the mobile device 152 and configured to receive a video signal output from the mobile device 152.

The user interface 158 can be localized to any language. For example, the user interface 158 can display information in any language, such as English, Spanish, German, French, Mandarin, Arabic, Japanese, Hindi, etc.

As shown in Figure 1, mobile device 152 can include a memory 154 and a processor 156. The memory 154 can be any type of storage medium that can be accessed by the processor 156 to perform various examples of the present disclosure. For example, the memory 154 can be a non-transitory computer readable medium having computer readable instructions (e.g., computer program instructions) stored thereon that are executable by the processor 156 for performing self-testing hazard sensing device diagnostics in accordance with the present disclosure.

The memory 154 can be volatile or nonvolatile memory. The memory 154 can also be removable (e.g., portable) memory, or nonremovable (e.g., internal) memory. For example, the memory 154 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 154 is illustrated as being located within mobile device 152, embodiments of the present disclosure are not so limited. For example, memory 154 can also be located internal to another computing resource (e.g., enabling computer readable instructions to be downloaded over the Internet or another wired or wireless connection).

As an example, mobile device 152 can (e.g., processor 156 can execute the instructions stored in memory 154 to) receive, via user interface 158, a selection (e.g., query) of one of self-testing hazard sensing devices 100. For instance, each respective self-testing hazard sensing device 100 can include a wireless beacon (e.g., a Bluetooth beacon) that transmits a wireless signal. Mobile device 152 can receive the wireless signals transmitted from the self-testing hazard sensing devices 100 that are located within a particular proximity of mobile device 152, and accordingly can identify which of the self-testing hazard sensing devices 100 are located within the particular proximity of mobile device 152 based on the received signals (e.g., any device whose signal is received by mobile device 152 can be identified as being located within the proximity of the mobile device). In an example, mobile device 152 can identify the self-testing hazard sensing device(s) 100 that is closest to the mobile device 152 based on the strength of the received wireless signals (e.g., the device(s) whose signal strength is the strongest can be identified as the closest device(s)).

Mobile device 152 can display, on user interface 158, the self-testing hazard sensing device(s) 100 that are located within the particular proximity of mobile device 152, and/or the self-testing hazard sensing device(s) 100 that is closest to mobile device 152, and receive the selection of the self-testing hazard sensing device from the displayed device(s) (e.g., the selected device can be one of the devices located within the particular proximity, and/or the device that is closes to mobile device 152). For example, mobile device 152 can display, on user interface 158, icons representing the self-testing hazard sensing device(s) 100 that are located within the particular proximity of mobile device 152 and/or closest to mobile device 152, and receive a touch selection (e.g., tap) from the user of mobile device 152 of one of the displayed devices on user interface 158.

Mobile device 152 can receive identification information for the selected self-testing hazard sensing device 100, such as, for instance, the serial number of the selected device, from the selected device. For example, each respective self-testing hazard sensing device 100 can have a unique serial number associated therewith, which can be included in the wireless signal transmitted by the wireless beacon of the sensing device. Accordingly, mobile device 152 can receive the identification information (e.g., serial numbers) for each of the self-testing hazard sensing device(s) 100 located within the particular proximity of mobile device 152, including the selected device (which may be the device closest to mobile device 152).

Mobile device 152 can send the identification information for the selected self-testing hazard sensing device 100 to gateway device 162 via network 160. For instance, mobile device 152 can send the identification information responsive to receiving the selection.

Responsive to receiving the identification information from mobile device 152, gateway device 162 can send a query to control panel 164 for diagnostic data for the selected self-testing hazard sensing device 100. Responsive to receiving the query, control panel 164 can retrieve the diagnostic data from the selected self-testing hazard sensing device 100, and send the retrieved diagnostic data to gateway device 162 responsive to retrieving it. As an additional example, control panel 164 can, responsive to receiving the query, send the diagnostic data to gateway device 162 (e.g., the control panel 164 may already have the diagnostic data, and may not need to retrieve it from the self-testing hazard sensing device). Gateway device 162 can then send the diagnostic data to mobile device 152 via network 160.

The diagnostic data can include, for example, a temperature of the selected self-testing hazard sensing device 100 (e.g., a temperature sensed by a temperature sensor of the device). As an additional example, the diagnostic data can include a drift compensation level (e.g., percentage) of the selected self-testing hazard sensing device 100. The drift compensation level can be determined, for instance, based on the dirt level in the device.

As an additional example, the diagnostic data can include an (e.g., the current) alarm sensitivity level (e.g., percentage) of the selected self-testing hazard sensing device 100. As an additional example, the diagnostic data can include a (e.g., the current) pre-alarm sensitivity level (e.g., percentage) of the selected self-testing hazard sensing device 100.

As an additional example, the diagnostic data can include a smoothing value of the selected self-testing hazard sensing device 100, such as, for instance, the peak smoothing value recorded by the device. Such values can include smoothing values caused by, for instance, airborne dust particles, disturbances of settled dust within the chamber of the device, RF interference, and/or small insects.

As an additional example, the diagnostic data can include the last inspection date of the selected self-testing hazard sensing device 100 (e.g., the recorded inspection date for the device). As an additional example, the diagnostic data can include the location of the selected self-testing hazard sensing device 100 in the facility, such as, for instance, the zone address of the device. As an additional example, the diagnostic data can include the peak (e.g., maximum) level (e.g., percentage) of alarms sensed by the selected self-testing hazard sensing device 100.

Mobile device 152 can display the diagnostic data for the selected self-testing hazard sensing device 100 on user interface 158, and the user (e.g., maintenance technician) of mobile device 152 can determine whether a maintenance action needs to be performed, and/or determine the maintenance action that needs to be performed, on the device based on (e.g. using) the diagnostic data. A maintenance action may need to be performed on the selected device, for example, if the diagnostic data is above or below a particular threshold.

As an example, if the drift compensation level of the selected self-testing hazard sensing device 100 is above a particular threshold (e.g., 50%), this can be an indication that the dust or dirt concentration level in the device is high, and a false alarm may be triggered. In response, the maintenance technician can clean the device.

As an additional example, if the smoothing value of the selected self-testing hazard sensing device 100 is above a particular threshold, this can be an indication that a false alarm may be triggered. In response, the maintenance technician can inspect the environment in which the device is located to determine the cause of the smoothing value exceeding the threshold.

As an additional example, if the temperature of the selected self-testing hazard sensing device 100 is above a particular threshold (e.g., normal room temperature), this can be an indication that something external to the device may be emitting heat. In response, the maintenance technician can attempt to locate and remove the external heat source, as it may present a fire hazard.

As an additional example, if a particular amount of time has passed since the last inspection date of the selected self-testing hazard sensing device 100, this can be an indication that the device is due for an inspection. In response, the maintenance technician can perform an inspection of the device.

In some embodiments, mobile device 152 can determine whether a maintenance action needs to be performed, and/or determine the maintenance action that needs to be performed, on the selected device based on (e.g. using) the diagnostic data. Mobile device 152 can determine that a maintenance action may need to be performed on the selected device, for example, if the diagnostic data is above or below a particular threshold, in a manner analogous to that described above.

In such embodiments, mobile device 152 can display, on user interface 158, an indication of whether the maintenance action needs to be performed on the selected device. For example, mobile device 152 can display a first color (e.g., red) on user interface 158 if it is determined the maintenance action needs to be performed, and can display a second color (e.g., green) on user interface 158 if it is determined a maintenance action does not need to be performed. As an additional example, mobile device 152 can display, on user interface 158, the maintenance action that needs to be performed and/or instructions for performing the maintenance action.

In some embodiments, mobile device 152 can determine (e.g., predict) an amount of time before a maintenance action may need to be performed on the selected device based on (e.g., using) the diagnostic data. Mobile device 152 can display this amount of time on user interface 158.

Figures 2A and 2B illustrate an example of a schematic diagram of a facility 270 having a plurality of self-testing hazard sensing devices 200-1, 200-2, 200-3, 200-4, 200-5, 200-6, 200-7, 200-8, 200-9, 200-10, 200-11, 200-12, 200-13 (which may be collectively referred to herein as self-testing hazard sensing devices 200) in accordance with an embodiment of the present disclosure. Self-testing hazard sensing devices 200 can be, for example, self-testing hazard sensing devices 100 previously described in connection with Figure 1. For example, self-testing hazard sensing devices 200 can be part of a fire control system of facility 270, and can be used to sense a fire occurring in the facility and/or sense carbon monoxide present in facility 270.

As shown in Figures 2A and 2B, self-testing hazard sensing devices 200 can be located throughout facility 270. For instance, in the examples illustrated in Figures 2A and 2B, devices 200-1 and 200-2 are located in area (e.g., room) 272-1 of facility 270, devices 200-3, 200-4, 200-5, and 200-6 are located in area 272-5 of facility 270, device 200-7 is located in area 272-3 of facility 270, devices 200-8 and 200-9 are located in area 272-4 of facility 270, device 200-10, 200-11, and 200-12 are located in area 272-6 of facility 270, and device 200-13 is located in area 272-2 of facility 270. Examples of the present disclosure, however, are not limited to a particular layout or arrangement of self-testing hazard sensing devices 200 in facility 270.

As shown in Figures 2A and 2B, a user 274 may be present in facility 270. For instance, user 274 is in area 272-1 of facility 270 in the example illustrated in Figure 2A, and user 274 is in (e.g., has moved from area 272-1 to) area 272-6 of facility 270 in the example illustrated in Figure 2B. User 274 can be, for example, a maintenance technician for the fire control system of facility 270. For instance, user 274 may be conducting a visual inspection of the fire control system (e.g., of self-testing hazard sensing device 200) of the facility. User 274 may have (e.g., on his or her person and/or possession of) mobile device 152 previously described in connection with Figure 1.

In the example illustrated in Figure 2A (e.g., when user 274 is located in area 272-1), user 274 is closest to self-testing hazard sensing devices 200-1 and 200-2. Accordingly, diagnostic data for devices 200-1 and/or 200-2 can be displayed to user 274 on mobile device 152, as previously described herein (e.g., in connection with Figure 1). For example, mobile device 152 can identify self-testing hazard sensing devices 200-1 and 200-2 as the devices 200 closest to mobile device 152, receive identification information for devices 200-1 and 200-2, and display devices 200-1 and 200-2 to user 274, as previously described herein. Mobile device 152 can receive a selection of self-testing hazard sensing device(s) 200-1 and/or 200-2 from user 274, and send a query for, receive, and display the diagnostic data for the selected device(s) 200-1 and/or 200-2, as previously described herein.

In the example illustrated in Figure 2B, (e.g., when user 274 is located in area 272-6), user 274 is closest to self-testing hazard sensing devices 200-10, 200-11, and 200-12. Accordingly, diagnostic data for devices 200-10, 200-11, and/or 200-12 can be displayed to user 274 on mobile device 152, as previously described herein (e.g., in connection with Figure 1). For example, mobile device 152 can identify self-testing hazard sensing devices 200-10, 200-11, and 200-12 as the devices 200 closest to mobile device 152, receive identification information for devices 200-10, 200-11, and 200-12, and display devices 200-10, 200-11, and 200-12 to user 274, as previously described herein. Mobile device 152 can receive a selection of self-testing hazard sensing device(s) 200-10, 200-11, and/or 200-12 from user 274, and send a query for, receive, and display the diagnostic data for the selected device(s) 200-10, 200-11, and/or 200-12, as previously described herein.

Figure 3 illustrates a block diagram of a self-test function 320 (e.g., smoke self-test function) of a self-testing hazard (e.g., fire) sensing device 300 in accordance with an embodiment of the present disclosure. Self-testing hazard sensing device 300 can be, for example, self-testing hazard sensing devices 100 and/or 200 previously described in connection with Figures 1 and 2A and 2B, respectively. As shown in Figure 3, self-testing hazard sensing device 300 includes a controller (e.g., microcontroller) 322, a gas and/or smoke generator 302, a sensor 304, and an airflow generator (e.g., variable airflow generator) 316.

Sensor 304 can be a smoke (e.g., particulate) sensor, a carbon monoxide (CO) sensor, or a combination thereof. For example, sensor 304 can be an optical sensor such as optical scatter chamber, a gas sensor, or an ionization sensor, among other types of sensors.

As shown in Figure 3, the microcontroller 322 can include a memory 324 and a processor 326. Memory 324 can be any type of storage medium that can be accessed by processor 326 to perform various examples of the present disclosure. For example, memory 324 can be a non-transitory computer readable medium having computer readable instructions (e.g., computer program instructions) stored thereon that are executable by processor 326 to perform self-testing hazard sensing device diagnostics in accordance with the present disclosure.

As an additional example, processor 326 can execute the executable instructions stored in memory 324 to generate a particular aerosol density level, measure the generated aerosol density level, determine an airflow rate from an external environment through the sensor 304, and transmit the determined airflow rate. In some examples, memory 324 can store the aerosol density level sufficient to trigger a fire response from a properly firing sensing device, the aerosol density level sufficient to test a fault condition without triggering a fire response, the threshold airflow rate to verify proper airflow through the sensor 304, and/or the particular period of time that has passed since previously conducting a smoke self-test function (e.g., generating a particular aerosol density level and measuring the generated aerosol density level).

As an additional example, processor 326 can execute the executable instructions stored in memory 324 to generate an aerosol density level, measure a rate at which the aerosol density level decreases after the aerosol density level has been generated, compare the measured rate at which the aerosol density level decreases with a baseline rate, and determine whether the self-testing hazard sensing device 300 is functioning properly (e.g., requires maintenance) based on the comparison of the measured rate and the baseline rate. In some examples, memory 324 can store the baseline rate and/or the measured rate.

The microcontroller 322 can execute the smoke self-test function 320 of the self-testing hazard sensing device 300 responsive to a particular period of time passing since previously conducting a smoke self-test function and/or responsive to receiving a command. For example, the microcontroller 322 can be used to generate aerosol. The aerosol can be drawn through the sensor 304 via the airflow generator (e.g., fan) 316 creating a controlled aerosol density level. The aerosol density level can be sufficient to trigger a fire response without saturating a sensor. The aerosol density level can be measured and the airflow rate can be determined by the sensor 304. For instance, the aerosol density level can be measured a number of times over a time period, and the rate at which the aerosol density level decreases can be determined based on the measurements of the aerosol density level over the time period. As shown in Figure 3, the sensor 304 can include a transmitter light-emitting diode (LED) 305 and a receiver photodiode 306 to measure the aerosol density level.

Once the aerosol density level is measured and/or the airflow rate is determined, the self-testing hazard sensing device 300 can store the test result (e.g., fire response, aerosol density level, rate at which the aerosol density level decreases after the aerosol density level has been generated, and/or airflow rate) in memory 324 and/or send the test result to additional device. Further, the measured rate at which the aerosol density level decreases can be stored in memory 324 as a baseline rate if, for example, the measured rate is the first (e.g., initial) measured rate at which the aerosol density level decreases in the self-testing hazard sensing device 300. If the self-testing hazard sensing device 300 already has a baseline rate, then the measured rate can be stored in memory 324 as a subsequently measured rate at which the aerosol density level decreases.

In some examples, self-testing hazard sensing device 300 (e.g., controller 322) can determine whether it is functioning properly based on the test result. For example, the self-testing hazard sensing device can determine it is functioning properly responsive to the triggering of a fire response and/or the airflow rate exceeding a threshold airflow rate.

In some examples, the self-testing hazard sensing device 300 (e.g., controller 322) can determine whether it is functioning properly (e.g., requires maintenance) by comparing the subsequently measured rate at which the aerosol density level decreases with the baseline rate. For example, the self-testing hazard device 300 may require maintenance when the difference between the measured rate and the baseline rate is greater than a threshold value. The threshold value can be set by a manufacturer, according to regulations, and/or set based on the baseline rate, for example.

As an additional example, processor 326 can execute the executable instructions stored in memory 324 to generate aerosol having a controllable density level, emit a first light that passes through the aerosol, emit a second light that passes through the aerosol, detect a scatter level of the first light that passes through the aerosol, detect a scatter level of the second light that passes through the aerosol, and calibrate a gain of a photodiode based on the detected scatter level of the first light, the detected scatter level of the second light, and the controllable aerosol density level. In some examples, memory 324 can store the detected scatter level of the first light and/or the detected scatter level of the second light.

For example, the aerosol can be drawn through the sensor 304 via the airflow generator (e.g., fan) 316 creating a controlled aerosol density level. The sensor 304 can include an additional transmitter LED (not shown in Figure 3) opposite photodiode 306, and an additional photodiode (not shown in Figure 3) opposite transmitter LED 305, and transmitter LED 305, photodiode 306, the additional transmitter LED, and the additional photodiode can measure the aerosol density level by detecting scatter levels. Scatter can be light from the transmitter LEDs reflecting, refracting, and/or diffracting off of particles and can be received by the photodiodes. The amount of light received by the photodiodes can be used to determine the aerosol density level. For instance, transmitter LED 305 can emit a first light and the additional transmitter LED can emit a second light. The additional photodiode can detect a scatter level of the first light and/or the second light and photodiode 306 can detect a scatter level of the first light and/or the second light.

In a number of embodiments, a fault (e.g., an error) can be triggered responsive to the detected scatter level. For example, the controller 322 can compare the detected scatter level to a threshold scatter level and trigger a fault responsive to the detected scatter level being below the threshold scatter level. Another example can include the controller 322 comparing the detected scatter level to a previously detected scatter level and triggering a fault responsive to the detected scatter level being less than the previously detected scatter level.

Each amplifier gain can be calibrated by storing the initial detected scatter level and each amplifier gain in memory 324. Over time LED emission levels of the transmitter LEDs can decrease, reducing the received light by the photodiodes, which could lead to the self-testing hazard sensing device 300 malfunctioning.

The amplifier gain used by the photodiodes for detecting scatter levels can be recalibrated as the transmitter LEDs degrade over time. Controller 322 can recalibrate the gain responsive to the detected scatter level. For example, the controller 322 can initiate a recalibration of the gain responsive to comparing the detected scatter level to a threshold scatter level and determining the detected scatter level is below the threshold scatter level. In some examples, the controller 322 can recalibrate the gain responsive to determining a difference between the detected scatter level and the initial detected scatter level is greater than a threshold value and/or responsive to determining the detected scatter level is less than a previously detected scatter level.

Figure 4 illustrates an example of a self-testing hazard sensing device 400 in accordance with an embodiment of the present disclosure. Self-testing hazard sensing device 400 can be, for example, self-testing hazard sensing devices 100 and/or 200 previously described in connection with Figures 1 and 2A and 2B, respectively.

A self-testing hazard sensing device 400 (e.g., smoke detector) can sense a fire occurring in a facility and trigger a fire response to provide a notification of the fire to occupants of the facility. A fire response can include visual and/or audio alarms, for example. A fire response can also notify emergency services (e.g., fire departments, police departments, etc.) In some examples, a plurality of fire sensing devices can be located throughout a facility (e.g., on different floors and/or in different rooms of the facility), as previously described herein (e.g., in connection with Figures 2A and 2B).

A self-testing hazard sensing device 400 can automatically or upon command conduct one or more tests contained within the self-testing hazard sensing device 400. The one or more tests can determine whether the self-testing hazard sensing device 400 is functioning properly, as previously described herein.

As shown in Figure 4, self-testing sensing device 400 can include a gas and/or smoke generator 402, a sensor 404 including a transmitter light-emitting diode (LED) 405 and a receiver photodiode 406, a heat sensor 410, a gas source 412, a gas sensor 414, an airflow generator (e.g., variable airflow generator) 416, a proximity sensor 418, and a heat source 419. In some examples, a self-testing hazard sensing device 400 can also include a microcontroller including memory and/or a processor, and/or an additional transmitter LED and receiver photodiode, as previously described herein (e.g., in connection with Figure 3).

Sensor 404 can be a smoke (e.g., particulate) sensor, a carbon monoxide (CO) sensor, or a combination thereof. For example, sensor 404 can be an optical sensor such as optical scatter chamber, a gas sensor, or an ionization sensor, among other types of sensors.

The gas and/or smoke generator 402 of the self-testing hazard sensing device 400 can generate aerosol which can be mixed into a controlled aerosol density level by the airflow generator 416, as previously described herein. The aerosol density level can be a particular level that can be detected by sensor 404. Once the aerosol density level has reached the particular level, the gas and/or smoke generator 402 can be turned off and the airflow generator 416 can increase the rate of airflow through the sensor 404. The airflow generator 416 can increase the rate of airflow through the sensor 404 to reduce the aerosol density level back to an initial level of the sensor 404 prior to the gas and/or smoke generator 402 generating aerosol. For example, the airflow generator 416 can remove the aerosol from the sensor 404 after it is determined whether the self-testing hazard sensing device 400 is functioning properly (e.g., after the rate in reduction of aerosol density is determined or after the scatter levels described herein are detected). If the self-testing hazard sensing device 400 is not blocked or covered, then airflow from the external environment through the sensor 404 will cause the aerosol density level to decrease. The rate at which the aerosol density level decreases after the aerosol density level has been generated is proportional to airflow from the external environment through the sensor 404, so the sensor 404 can measure the airflow to determine whether the self-testing hazard sensing device 400 is impeded and whether the self-testing hazard sensing device 400 is functioning properly.

The gas and/or smoke generator 402 can be used to generate aerosol to, for instance, create airborne particles to simulate smoke from a fire. The particles can measure approximately 1 micrometer in diameter and/or the particles can be within the sensitivity range of the sensor 404. Generator 402 generate an aerosol density level sufficient to trigger a fire response from a properly functioning fire sensing device without saturating the sensor 404 and/or generate an aerosol density level sufficient to test a fault condition without triggering a fire response or saturating the sensor 404. The ability to control the aerosol density level can allow a smoke test to more accurately mimic the characteristics of a fire and prevent the sensor 404 from becoming saturated.

The sensor 404 can sense the external environment due to a baffle opening in the self-testing hazard sensing device 400 that allows air and/or smoke from a fire to flow through the self-testing hazard sensing device 400. The sensor 404 can be an example of an airflow monitoring device, and can measure the aerosol density level. In some examples a different airflow monitoring device can be used to measure the airflow through the self-testing hazard sensing device 400.

As previously discussed, the rate of reduction in aerosol density level can be used to determine an airflow rate from the external environment through the sensor 404, and a determination of whether self-testing hazard sensing device 400 is functioning properly can be made based on the determined air flow rate and/or the fire response. For example, the self-testing hazard sensing device 400 can be determined to be functioning properly responsive to the airflow rate exceeding a threshold airflow rate and/or a fire response being triggered. As an additional example, the self-testing hazard sensing device can be determined to require maintenance responsive to a difference between the measured airflow rate and a baseline rate being greater than a threshold value.

In some examples, the self-testing hazard sensing device 400 can trigger a fault if the airflow rate fails to exceed a threshold airflow rate. For example, the self-testing hazard sensing device 400 can send a notification of the fault to a monitoring device when an impeded airflow is detected. In some examples, the impeded airflow can be caused by a person deliberately attempting to mask (e.g., cover) the self-testing hazard sensing device 400.

Further, as previously discussed, the detected scatter levels from the test can be used to determine whether self-testing hazard sensing device 400 requires maintenance and/or recalibration. For example, the self-testing hazard sensing device 400 can be determined to require maintenance and/or recalibration responsive to a calculated sensitivity, calculated using the detected scatter level and the known aerosol density level, being outside a sensitivity range.

In some examples, the self-testing hazard sensing device 400 can generate a message if the device requires maintenance (e.g., if the difference between the measured airflow rate and the baseline rate is greater than the threshold value, or the calculated sensitivity is outside the sensitivity range). The self-testing hazard sensing device 400 can send the message to a monitoring device and/or a mobile device, for example. As an additional example, the self-testing hazard sensing device 400 can include a user interface that can display the message.

The self-testing hazard sensing device 400 of Figure 4 illustrates transmitter LED 405 and photodiode 406. Transmitter LED 405 can emit a first light and a second light. In some examples, the first light can have a first wavelength and the second light can have a second wavelength. For example, transmitter LED 405 can include an infrared (IR) LED with a first wavelength and a blue LED with a second wavelength. Having two or more different wavelengths can help the self-testing hazard sensing device 400 detect various types of smoke. For example, a first wavelength can better detect a flaming fire including black aerosol and a second wavelength can better detect water vapor including white non-fire aerosol. In some examples, a ratio of the first wavelength and the second wavelength can be used to indicate the type of smoke. Photodiode 406 can receive a scatter of the first light and/or the second light from transmitter LED 405. Photodiode 406 can detect a scatter level of the first light and/or a scatter level of the second light. In a number of embodiments, photodiode 406 can be a transmitter LED.

In an additional example, the self-testing hazard sensing device 400 may include an additional transmitter LED opposite transmitter LED 405. Transmitter LED 405 can emit a first light and the additional transmitter LED can emit a second light. Transmitter LED 405 and/or the additional transmitter LED can be located at particular angles from photodiode 406 to detect various types of smoke. For example, transmitter LED 405 can be located approximately 120 degrees from photodiode 406 and the additional transmitter LED can be located approximately 60 degrees from photodiode 406. Photodiode 406 can receive the first light from transmitter LED 405 and/or the second light from the additional transmitter LED, and can detect a scatter level of the first light and/or a scatter level of the second light.

The self-testing hazard sensing device 400 can include a heat source 419, but may not require a heat source 419 if the heat sensor 410 is self-heated. In some examples, heat source 419 can generate heat at a temperature sufficient to trigger a fire response from a properly functioning heat sensor 410. The heat source 419 can be turned on to generate heat during a heat self-test. Once the heat self-test is complete, the heat source 419 can be turned off to stop generating heat.

The heat sensor 410 can normally be used to detect a rise in temperature caused by a fire. Once the heat source 419 is turned off, the heat sensor 410 can measure a rate of reduction in temperature. The rate of reduction in temperature can be proportional to the airflow from the external environment through the self-testing hazard sensing device 400 and as such the rate of reduction in temperature can be used to determine the airflow rate. The airflow rate can be used to determine whether air is able to enter the self-testing hazard sensing device 400 and reach the heat sensor 410. The airflow rate can also be measured and used to compensate the generation of an aerosol used to self-test the sensing device 400. Further, the rate in reduction in temperature can be used to determine whether the self-testing hazard sensing device 400 is functioning properly (e.g., requires maintenance) and/or whether the sensing device 400 is dirty. For instance, the maintenance can include cleaning the self-testing hazard sensing device 400 so that clean air is able to enter the device and reach the heat sensor 410.

A fire response can be triggered responsive to the heat sensor 410 detecting a temperature exceeding a threshold temperature. The self-testing hazard sensing device 400 can be determined to be functioning properly responsive to the triggering of the fire response and the determined airflow rate.

A fault can be triggered by the self-testing hazard sensing device 400 responsive to a determined change in temperature over time failing to exceed a threshold temperature change over time. In some examples, the fault can be sent to a monitoring device. The determined change in temperature over time can determine whether the self-testing hazard sensing device 400 is functioning properly. In some examples, the self-testing hazard sensing device 400 can be determined to be functioning properly responsive to an airflow rate derived from the determined change in temperature over time exceeding a threshold airflow rate.

A gas source 412 can be separate and/or included in the gas and/or smoke generator 402, as shown in Figure 4. The gas source 412 can be configured to release one or more gases. The one or more gases can be produced by combustion. In some examples, the one or more gases can be carbon monoxide (CO) and/or a cross-sensitive gas. The gas source 412 can generate gas at a gas level sufficient to trigger a fire response from a properly functioning fire sensing device and/or trigger a fault in a properly functioning gas sensor 414.

The gas sensor 414 can detect one or more gases in the self-testing hazard sensing device 400, such as, for example, the one or more gases released by the gas source 412. For example, the gas sensor 414 can detect CO and/or cross-sensitive gases. In some examples, the gas sensor 414 can be a CO detector. Once the gas source 412 is turned off, the gas sensor 414 can measure the gas level and determine the change in gas level over time (e.g., rate of reduction in gas level) to determine the airflow rate. The airflow rate can be used to determine whether air is able to enter the self-testing hazard sensing device 400 and reach the gas sensor 414, and hence whether self-testing hazard sensing device 400 is functioning properly and/or is dirty (e.g., requires cleaning).

A fire response of the self-testing hazard sensing device 400 can be triggered responsive to the gas sensor 414 detecting one or more gases and/or one or more gases exceeding a threshold level. The self-testing hazard sensing device 400 can be determined to be functioning properly responsive to the fire response, the gas sensor 414 detecting the one or more gases and/or the one or more gases exceeding the threshold level and the self-testing hazard sensing device 400 properly triggering a fire response.

The self-testing hazard sensing device 400 can be determined to be functioning properly based on the change in the gas level over time. In some examples, the self-testing hazard sensing device 400 can be determined to be functioning properly responsive to the change in the gas level over time exceeding a threshold gas level change and/or a threshold airflow rate, derived from the determined change in gas level over time, exceeding a threshold airflow rate. The self-testing hazard sensing device 400 can trigger and/or send a fault responsive to the change in gas level over time failing to exceed the threshold change in gas level and/or the airflow rate failing to exceed the threshold airflow rate. In some examples, the self-testing hazard sensing device 400 can be determined to be functioning properly responsive to the triggering of a fire response and/or triggering of a fault.

The airflow generator 416 can control the airflow through the self-testing hazard sensing device 400, including the sensor 404. For example, the airflow generator 416 can move gases and/or aerosol from a first end of the self-testing hazard sensing device 400 to a second end of the sensing device 400. In some examples, the airflow generator 416 can be a fan. The airflow generator 416 can start responsive to the gas and/or smoke generator 402, the heat source 419, and/or the gas source 412 starting. The airflow generator 416 can stop responsive to the gas and/or smoke generator 402, the heat source 419, and/or the gas source 412 stopping, and/or the airflow generator 416 can stop after a particular period of time after the gas and/or smoke generator 402, the heat source 419, and/or the gas source 412 has stopped.

The self-testing hazard sensing device 400 can include one or more proximity sensors 418. A proximity sensor 418 can detect objects within a particular distance of the self-testing hazard sensing device 400, and therefore can be used to detect tampering intended to prevent sensing device 400 from functioning properly. For example, the proximity sensor 418 can detect an object (e.g., a hand, a piece of clothing, etc.) placed in front of or on the self-testing hazard sensing device 400 to impede heat, gas, and/or smoke from entering the sensor 404 in an attempt to prevent the triggering of a fire response from the sensing device 400. In some examples, a fire response of the self-testing hazard sensing device 400 can be triggered responsive to the proximity sensor 418 detecting an object within a particular distance of the sensing device 400.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A mobile device (152) for self-testing hazard sensing device diagnostics, comprising:
a user interface (158);
a memory (154); and
a processor (156) configured to execute executable instructions stored in the memory (154) to:
receive, via the user interface (158), a selection of a self-testing hazard sensing device (100, 200, 300, 400);
send identification information for the self-testing hazard sensing device (100, 200, 300, 400) to a gateway device (162) responsive to receiving the selection;
receive, from the gateway device (162), diagnostic data for the self-testing hazard sensing device (100, 200, 300, 400); and
display, on the user interface (158), the received diagnostic data for the self-testing hazard sensing device (100, 200, 300, 400).

2. The mobile device of claim 1, wherein the processor is configured to execute the instructions to:
identify self-testing hazard sensing devices located within a particular proximity of the mobile device; and
display, on the user interface, the self-testing hazard sensing devices located within the particular proximity of the mobile device.

3. The mobile device of claim 2, wherein the processor is configured to execute the instructions to receive the selection of the self-testing hazard sensing device from the displayed self-testing hazard sensing devices located within the particular proximity of the mobile device.

4. The mobile device of claim 2, wherein the processor is configured to execute the instructions to receive identification information for the self-testing hazard sensing devices located within the particular proximity of the mobile device.

5. The mobile device of claim 1, wherein the identification information comprises a serial number of the self-testing hazard sensing device.

6. The mobile device of claim 1, wherein the processor is configured to execute the instructions to:
determine whether a maintenance action needs to be performed on the self-testing hazard sensing device based on the received diagnostic data for the self-testing hazard sensing device; and
display, on the user interface, an indication of whether the maintenance action needs to be performed on the self-testing hazard sensing device.

7. The mobile device of claim 6, wherein displaying the indication of whether the maintenance action needs to be performed on the self-testing hazard sensing device comprises:
displaying a first color on the user interface if it is determined the maintenance action needs to be performed; and
displaying a second color on the user interface if it is determined the maintenance action does not need to be performed.

8. A method for self-testing hazard sensing device diagnostics, comprising:
receiving, by a mobile device (152) from a self-testing hazard sensing device (100, 200, 300, 400), identification information for the self-testing hazard sensing device (100, 200, 300, 400);
sending, by the mobile device (152), the identification information for the self-testing hazard sensing device (100, 200, 300, 400) to a gateway device (162);
receiving, from the gateway device (162), diagnostic data for the self-testing hazard sensing device (100, 200, 300, 400); and
displaying, by the mobile device (152), the received diagnostic data for the self-testing hazard sensing device (100, 200, 300, 400).

9. The method of claim 8, wherein the method includes:
receiving, by the mobile device, a selection of the self-testing hazard sensing device; and
sending, by the mobile device, the identification information for the self-testing hazard sensing device to the gateway device responsive to receiving the selection.

10. The method of claim 8, wherein the self-testing hazard sensing device is a self-testing hazard sensing device that is closest to the mobile device.

11. The method of claim 8, wherein the method includes:
determining, by the mobile device, a maintenance action that needs to be performed on the self-testing hazard sensing device based on the received diagnostic data for the self-testing hazard sensing device; and
displaying, by the mobile device, the maintenance action that needs to be performed on the self-testing hazard sensing device.

12. The method of claim 8, wherein the diagnostic data for the self-testing hazard sensing device includes a temperature of the self-testing hazard sensing device.

13. The method of claim 8, wherein the diagnostic data for the self-testing hazard sensing device includes a drift compensation level of the self-testing hazard sensing device.

14. The method of claim 8, wherein the diagnostic data for the self-testing hazard sensing device includes an alarm and/or pre-alarm sensitivity level of the self-testing hazard sensing device.

15. The method of claim 8, wherein the diagnostic data for the self-testing hazard sensing device includes a smoothing value of the self-testing hazard sensing device.
